(19) Europäisches Patentamt
European Patent Office
Office européen des brevets

(11) **EP 0 749 237 B1**

(12) **FASCICULE DE BREVET EUROPEEN**

(45) Date de publication et mention
de la délivrance du brevet:
**24.07.2002 Bulletin 2002/30**

(51) Int Cl.⁷: **H04N 5/44**
// H04N5/46

(21) Numéro de dépôt: **96400878.3**

(22) Date de dépôt: **24.04.1996**

(54) **Procédé de numérisation de signaux vidéo FI et dispositif pour mettre en oeuvre ce procédé**

Verfahren zur Digitalisierung von Zwischenfrequenzvideosignalen und Vorrichtung zur Durchführung des Verfahrens

Method for digitising video signals at intermediate frequency and apparatus for implementing the same

(84) Etats contractants désignés:
**DE FR GB IT**

(30) Priorité: **12.06.1995 FR 9506904**

(43) Date de publication de la demande:
**18.12.1996 Bulletin 1996/51**

(73) Titulaire: **THOMSON multimedia**
**92648 Boulogne Cédex (FR)**

(72) Inventeur: **Boie, Werner**
**92050 Paris La Défense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 062 872        EP-A- 0 321 681**
**EP-A- 0 442 578        EP-A- 0 629 040**
**WO-A-88/10548          US-A- 4 502 078**

**EP 0 749 237 B1**

**Description**

L'invention est relative un procédé de numérisation de signaux vidéo FI c'est à dire à fréquence intermédiaire.

Il y a une tendance croissante à numériser les signaux de toutes sortes dans les installations de télévision, ou installations TV. Les motifs en sont divers mais on peut dire que les techniques de traitement des signaux numériques permettent, d'une manière générale, d'accomplir de façon plus souple et plus économique les fonctions de traitement, filtrage et démodulation des signaux, que ne le permettent les solutions analogiques.

La numérisation des signaux dans la partie dispositif d'accord ou dans le circuit FI (circuit à fréquence intermédiaire) pose encore aujourd'hui de sérieux problèmes. Une difficulté majeure réside dans les performances insuffisantes des convertisseurs analogiques/numériques (ou convertisseurs A/D) disponibles sur le marché à prix acceptable, notamment en ce qui concerne la largeur de bande et la résolution dynamique.

L'invention a pour but, surtout, de fournir un procédé de numérisation de signaux vidéo FI qui permette d'obtenir des résultats satisfaisants, notamment eu égard aux exigences concernant la largeur de bande et la résolution dynamique, avec des composants d'un prix de revient acceptable.

Selon l'invention, le procédé de numérisation de signaux vidéo, de fréquence intermédiaire comporte une étape de pré-filtrage d'un signal dont le canal est filtré des autres canaux adjacents, une étape d'échantillonnage-blocage du signal par un circuit d'échantillonnage-blocage ayant une largeur de bande utile jusqu'au moins la fréquence intermédiaire maximale qui correspond à la fréquence du canal, la fréquence d'échantillonnage du circuit d'échantillonnage-blocage étant comprise entre une fréquenced'échantillonnage minimale égale aux deux tiers de la fréquence inter médiaire maximale et une fréquence d'échantillonnage maximale égale à la différence entre cette fréquence intermédiaire maximale et la largeur de bande du canal sélectionné.

Le convertisseur A/D selon l'invention a essentiellement un rôle de quantificateur et peut travailler à une fréquence plus faible. L'échantillonneur-bloqueur, distinct du convertisseur A/D, est conçu de manière à suivre très rapidement le signal à l'entrée et à conserver l'amplitude à la sortie, pour permettre une bonne quantification par le convertisseur A/D.

De manière plus générale, la fréquence d'échantillonnage est choisie afin d'assurer le remplissage du spectre de fréquences après échantillonnage, pour l'occupation d'une moindre place sur les fréquences, tout en évitant le phénomène de repliement (connu sous le terme anglais "aliasing").

Ainsi, on agence l'échantillonneur-bloqueur de manière à réduire au minimum, ou à supprimer, toute altération du signal de sortie par rapport au signal d'entrée.

La fréquence d'échantillonnage commune à l'échantillonneur-bloqueur et au convertisseur A/D est avantageusement inférieure à la fréquence FI la plus élevée.

L'invention est également relative à un dispositif pour la mise en oeuvre du procédé, ce dispositif comprenant un circuit de pré-filtrage, pour recevoir un signal de fréquence intermédiaire dont le canal est filtré des autres canaux adjacent, un circuit d'échantillonnage-blocage pour échantillonner lesdits signaux filtrés, le circuit d'échantillonnage-blocage ayant une largeur de bande utile jusqu'au moins la fréquence intermédiaire maximale qui correspond à la fréquence maximale du canal, la fréquence d'échantillonnage de l'échantillonneur-bloqueur étant comprise entre une fréquence d'échantillonnage minimale égale aux deux tiers de la fréquence intermédiaire maximale et une fréquence d'échantillonnage maximale égale à la différence entre cette fréquence intermédiaire maximale et la largeur de bande du canal sélectionné.

De préférence, le circuit de pré-filtrage est un filtre à ondes de surface ou filtre SAW.

L'invention consiste, mises à part les dispositions exposées ci-dessus, en un certain nombre d'autres dispositions, dont il sera plus explicitement question ci-après à propos d'un exemple de réalisation décrit avec référence aux dessins ci-annexés, mais qui n'est nullement limitatif.

La figure 1, de ces dessins, est un schéma d'un dispositif de numérisation de signaux vidéo FI.

La figure 2A est un diagramme schématique représentant les signaux de sortie d'un dispositif d'accord.

La figure 2B est un diagramme schématique de la bande passante du filtre assurant le pré-filtrage.

La figure 2C est un diagramme du signal résultant du pré-filtrage.

La figure 3A est un diagramme reprenant celui de la figure 2C avec représentation de la largeur de bande nécessaire pour l'échantillonneur-bloqueur.

La figure 3B est un diagramme illustrant les effets de l'échantillonnage sur le signal de la figure 3A à une fréquence d'échantillonnage $f_{S\,min.2}$.

La figure 3C est un diagramme illustrant les effets de l'échantillonnage sur le signal de la figure 3A avec une autre fréquence d'échantillonnage $f_{S\,max.2}$.

La figure 4A est un diagramme semblable à celui de la figure 2C illustrant le signal FI après pré-filtrage.

La figure 4B est un diagramme illustrant les effets de l'échantillonnage à une fréquence $f_S$ assurant un remplissage du spectre.

La figure 4C est un diagramme semblable à celui de la figure 4B pour une fréquence d'échantillonnage différente.

La figure 5, enfin, est un diagramme illustrant une pente de Nyquist.

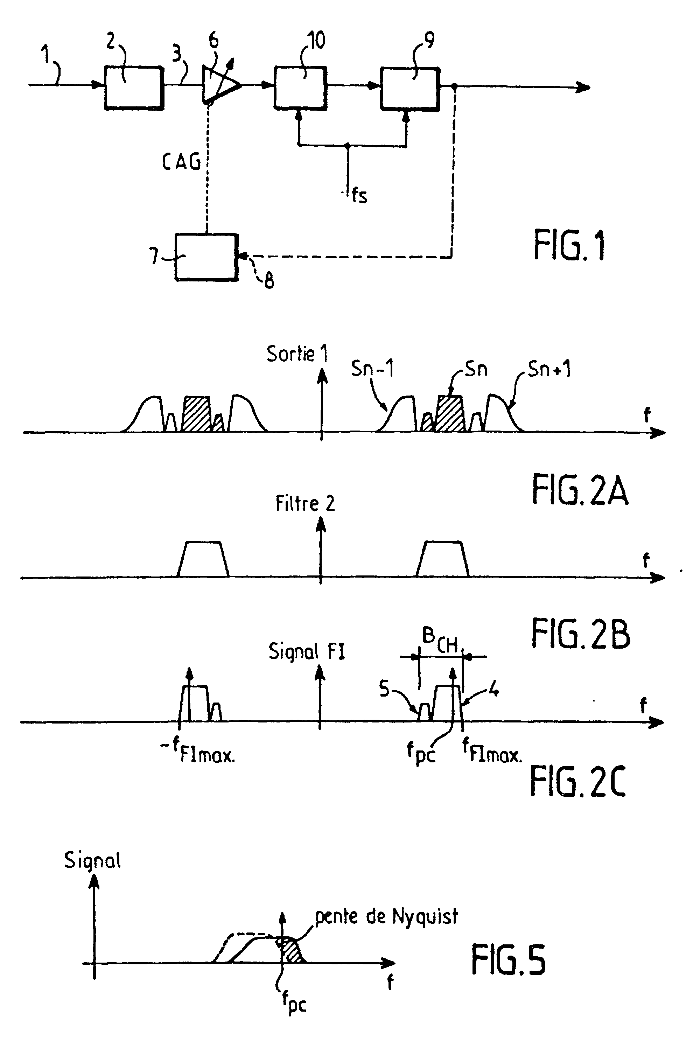

En se reportant à la figure 1, on peut voir un circuit pour la numérisation de signaux vidéo FI. Afin de réduire la gamme dynamique nécessaire du signal FI qui doit être numérisé, qui, par une liaison 1, provient de la sortie d'un dispositif d'accord (connu sous le terme tuner), on fait subir à ce signal de sortie un pré-filtrage dans un filtre 2, avantageusement un filtre à ondes de surface (filtre SAW).

La figure 2A représente, schématiquement, avec les fréquences portées en abscisses et les amplitudes portées en ordonnées, le signal de sortie du dispositif d'accord. Ce signal comprend le signal Sn, dont les zones sont hachurées, correspondant au canal vidéo souhaité et des signaux de canaux adjacents représentés schématiquement, et désignés par Sn+1 et Sn-1. Le signal présente une symétrie par rapport à l'axe des ordonnées, avec une partie qui, dans la représentation mathématique, correspond à des fréquences négatives.

La figure 2B est un diagramme illustrant la bande passante du filtre 2, assurant le pré-filtrage. Les fréquences sont portées en abscisses tandis que le coefficient de transmission du filtre est porté en ordonnées. La bande passante correspond au canal souhaité.

La figure 2C est un diagramme représentant le signal à la sortie 3 du filtre 2. Les signaux des canaux adjacents Sn-1, Sn+1 ont été éliminés. Seul subsiste le signal Sn avec la largeur de bande $B_{CH}$ du canal considéré. Le signal Sn est représenté schématiquement par une bande trapézoïdale 4, correspondant à la bande vidéo autour de la fréquence $f_{pc}$ de la porteuse image, et une bande son 5, plus étroite, située dans l'exemple considéré juste au-dessous de la limite inférieure de la bande 4, pour les fréquences positives ; les positions sont inversées dans le domaine des fréquences négatives. La limite supérieure de la bande 4 correspond à la fréquence maximale $f_{FI}$ max du spectre FI.

En revenant à la figure 1, on voit que la sortie 3 du filtre 2 est reliée à l'entrée d'un amplificateur 6 de préférence avec circuit 7 de commande automatique de gain (CAG). Le circuit 7 de CAG reçoit sur son entrée 8, dans l'exemple considéré, le signal de sortie d'un convertisseur analogique/numérique (convertisseur A/D) 9. En variante, le circuit CAG 7 pourrait recevoir, sur son entrée 8, un signal de sortie traité dans un bloc de traitement de signal numérique non représenté sur la figure 1. Le circuit CAG permet d'assurer que le signal d'entrée fourni au convertisseur A/D 9 est bien adapté à sa gamme d'amplitude disponible.

Le signal sortant de l'amplificateur 6 est envoyé sur l'entrée d'un circuit échantillonneur-bloqueur 10 distinct du convertisseur A/D 9. La séparation de l'échantillonneur-bloqueur 10 vis-à-vis du convertisseur A/D 9 permet de satisfaire à des exigences différentes relativement aux fréquences entre les circuits 9 et 10.

La largeur de bande de l'échantillonneur-bloqueur 10 s'étend au moins jusqu'à la fréquence intermédiaire maximale FI à numériser, ou est même supérieure à cette fréquence maximale afin d'éviter des effets supplémentaires de non linéarité.

Le convertisseur A/D 9, qui suit l'échantillonneur-bloqueur 10, doit avoir une résolution dynamique suffisante jusqu'à seulement la moitié de la fréquence d'échantillonnage, et ceci peut être différent de l'exigence pour le circuit échantillonneur-bloqueur 10 lorsqu'un sous-échantillonnage est effectué.

L'échantillonneur-bloqueur 10 est prévu non seulement pour avoir une largeur de bande suffisante, telle que définie précédemment, mais pour être performant et suivre le signal à l'entrée, provenant de l'amplificateur 6, à niveau constant, et pour conserver constante l'amplitude des signaux échantillonnés-bloqués à la sortie du circuit 10. Ces conditions sont nécessaires pour que le convertisseur A/D 9, constitué essentiellement par un quantificateur, fournisse un signal numérique qui correspond parfaitement au signal analogique délivré à l'entrée du circuit 10.

Dans la pratique, les quantificateurs des convertisseurs A/D disponibles dans le commerce ont des caractéristiques tout à fait suffisantes pour donner de bons résultats dans la mesure où les signaux échantillonnés fournis à l'entrée de ces convertisseurs sont corrects, avec une fréquence d'échantillonnage réduite.

L'échantillonnage du signal vidéo FI est effectué selon une technique de sous-échantillonnage à une fréquence relativement faible, inférieure à la fréquence d'échantillonnage généralement préconisée et qui est le double de la fréquence maximale FI.

Tout d'abord, on va considérer une fréquence d'échantillonnage $f_S$ qui est égale à la fréquence intermédiaire FI la plus élevée ($f_{FI\,max.}$). Le spectre périodique dû au processus d'échantillonnage dépend de la fréquence d'échantillonnage $f_S$ et plus précisément de la différence et de la somme entre cette fréquence d'échantillonnage $f_S$ et les fréquences des signaux du canal.

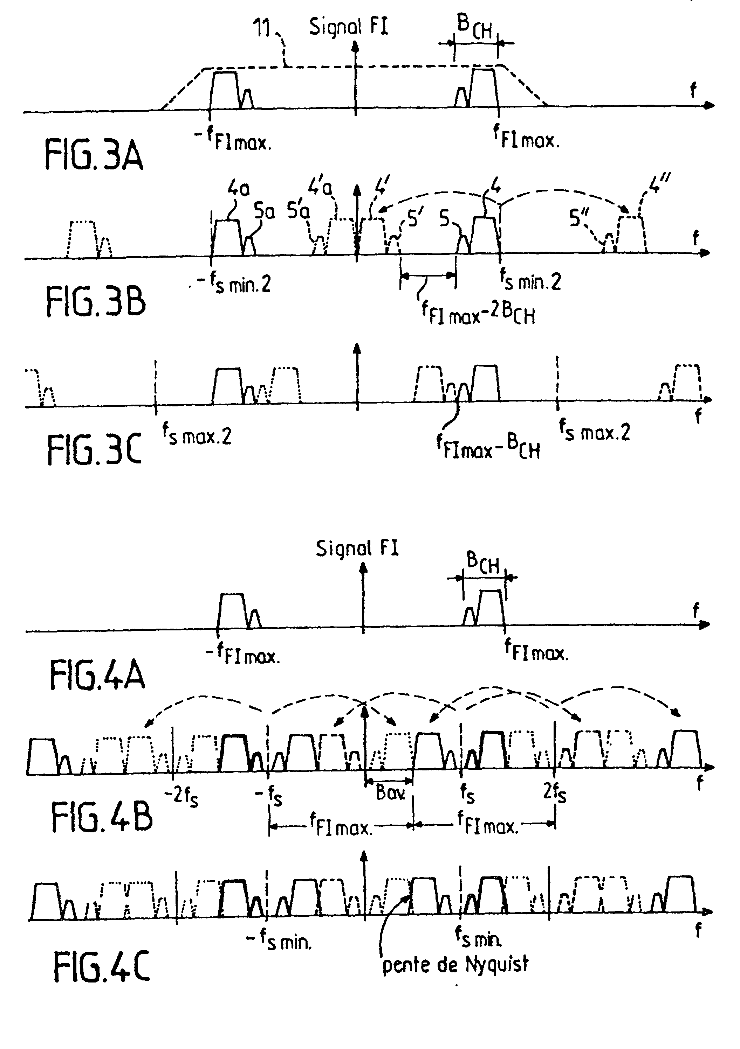

Sur la figure 3A on retrouve les signaux de la figure 2C issus du filtre 2, tandis que la bande passante 11 de l'échantillonneur-bloqueur 10 a été représentée en tirets. Comme illustré, la limite supérieure de cette bande passante 11 est plus élevée que la fréquence maximale FI des signaux considérés.

Avec une fréquence d'échantillonnage $f_{Smin.2}$ égale à la fréquence FI maximale, soit $f_{FI\,max.}$, on obtient un spectre, après échantillonnage, tel que représenté sur la figure 3B. Par différence entre la fréquence d'échantillonnage et la fréquence des signaux des bandes 4 et 5, on obtient les spectres 4', 5' représentés en tirets. La limite inférieure de la bande 4' correspond sensiblement à l'origine de l'axe des fréquences. Par addition de la fréquence d'échantillonnage $f_S$ et de la fréquence des signaux des bandes 4 et 5 on obtient les bandes 4", 5" également représentées en tirets.

Du côté des fréquences négatives, on obtient un phénomène semblable en miroir, ou symétrique, par rapport à l'axe des ordonnées. On voit que la limite supérieure de la bande 4'a correspond également sensiblement à l'origine de l'axe des fréquences. Toutefois, il n'y a pas chevauchement des bandes 4' et 4'a, chevauchement qui conduirait au phénomène parasite de repliement (connu sous le terme de "aliasing"). Mais il est clair que pour une fréquence d'échantillonnage quelque peu inférieure à $f_{FI\,max.}$, il y aurait chevauchement et apparition du phénomène de repliement car la limite inférieure de la bande 4' se trouverait au-delà de l'origine des fréquences, du côté des fréquences négatives, et inversement pour la limite supérieure de la bande 4'a.

Ceci montre que la réduction de la fréquence d'échantillonnage est soumise à certaines contraintes si l'on ne veut pas altérer le signal résultant.

Par ailleurs, la fréquence d'échantillonnage ne peut pas être augmentée de manière quelconque. La figure 3C illustre la limite de cette augmentation qui est atteinte lorsque la fréquence d'échantillonnage devient égale à la différence entre le double de la fréquence intermédiaire FI maximale et le double de la largeur de bande du canal $B_{CH}$, soit $f_{Smax.2} = 2\,(f_{FI\,max.} - B_{CH})$.

Ainsi, la fréquence d'échantillonnage $f_S$, choisie inférieure à la fréquence généralement préconisée, peut varier dans des limites définies par:

$$f_{FI\,max.} < f_S < 2(f_{FI\,max.} - B_{CH}).$$

Pour un canal de 8 MHz, dans un standard PAL B/G, la fréquence d'échantillonnage fS se trouve comprise entre 40,4 MHz et 64,8 MHz

$$40,4\ MHz < f_S < 64,8\ MHz$$

Toutefois, en considérant les figures 3B et 3C illustrant les spectres obtenus avec des fréquences d'échantillonnage respectivement égales à la limite inférieure et à la limite supérieure évoquées ci-dessus, il apparaît que l'occupation des fréquences par le spectre n'est pas optimale, des intervalles non occupés subsistant entre des bandes.

Pour mieux remplir le spectre après échantillonnage, et pour occuper moins de place sur les fréquences, on choisit une fréquence d'échantillonnage $f_S$ inférieure à la fréquence FI minimale, ou inférieure à la fréquence FI maximale diminuée de la largeur de bande du canal, comme illustré sur la figure 4B. Avantageusement la fréquence d'échantillonnage est même réduite jusqu'à une valeur égale aux 2/3 de la fréquence FI maximale ($f_{FI\,max.}$). La largeur de bande maximale $B_{av.}$ du signal à échantillonner peut alors atteindre le tiers de la fréquence maximale FI :

$$B_{max.} = B_{av.} = f_{FI\,max.}/3.$$

Dans ce cas, le spectre après échantillonnage est rempli avec juxtaposition des bandes sans intervalles perdus, mais sans chevauchement de ces bandes.

Cette façon de procéder correspond à un sous-échantillonnage à une fréquence inférieure à celle généralement recommandée. Cette fréquence abaissée permet de traiter les signaux à numériser avec un convertisseur A/D disponible sur le marché à un prix acceptable, tout en obtenant des résultats satisfaisants.

La fréquence d'échantillonnage $f_S$ peut ainsi varier entre les limites $2f_{FI\,max.}/3$ et $f_{FI\,max.} - B_{CH}$ :

$$2f_{FI\,max.}/3 < f_S < f_{FI\,max.} - B_{CH}.$$

La largeur de bande disponible correspondante $B_{av.}$ est comprise entre $f_{FI\,max.}/3$ et $B_{CH}$

$$f_{FI\,max.}/3 < B_{av.} < B_{CH}.$$

Dans le cas d'une réception multi-standard pour laquelle la largeur de bande du canal devrait être maintenue variable, la fréquence minimale d'échantillonnage devrait être choisie car elle offre la largeur de bande maximale qui, pour une fréquence intermédiaire maximale $f_{FI}$ max. = 40,4 MHz donne :

$$B_{max.} = 40,4\ MHz/3 = 13,466\ MHz,$$

pour un standard PAL B/G (qui correspond à un certain standard TV).

La fréquence d'échantillonnage devient alors :

$$f_S = 2/3\ f_{FI\ max.} = 2/3 \times 40{,}4\ \text{MHz} = 26{,}933\ \text{MHz}.$$

Si l'on accepte même quelque peu le phénomène de repliement (phénomène d'"'aliasing") dans la bande latérale restante, la fréquence d'échantillonnage peut être réduite de la moitié de la largeur de la bande latérale restante. Pour le standard PAL B/G considéré, ou la bande latérale restante a une largeur de 1,25 MHz, on aboutit à une fréquence d'échantillonnage minimale :

$$f_{S\ min.} = 26{,}933\ \text{MHz} - (1{,}25/2) = 26{,}308\ \text{MHz}.$$

Avantageusement, le filtre 2 (figure 1) assurant le pré-filtrage réalise également une pente de Nyquist comme illustré sur la figure 5. On rappelle que cette pente de Nyquist vise à éliminer la partie hachurée de la bande latérale restante située au-delà de la fréquence de la porteuse vidéo $f_{pc}$. Ceci permet lors de la démodulation et des traitements ultérieurs du signal, d'éviter des parasites. Dans ce cas, au lieu d'utiliser la fréquence intermédiaire maximale dans les formules données précédemment, on utilise la fréquence de Nyquist (fréquence de la porteuse vidéo), ce qui conduit, dans l'exemple du standard PAL B/G à une fréquence d'échantillonnage minimale encore plus faible, $f_{S\ min.}$ = 25,933 MHz.

D'une manière générale, on peut dire que la fréquence d'échantillonnage minimale dépend de la fréquence intermédiaire FI maximale et de la largeur de bande du canal du standard TV considéré. Si la largeur de bande maximale de canal est limitée à environ 8 MHz, ce qui signifie qu'une réception des standards MAC ou HD MAC peut être exclue, la fréquence intermédiaire classique FI peut être réduite de la valeur :

$$f_{FI\ vision} = 38{,}9\ \text{MHz (B/G)}$$

à

$$f_{FI\ vision} = 3\ B_{max.} - (\text{largeur de la bande latérale restante}) = 24$$

$$\text{MHz} - 1{,}25\ \text{MHz} = 22{,}75\ \text{MHz}.$$

La fréquence d'échantillonnage minimale nécessaire devient alors :

$$f_{S\ min.} = 2\ B_{max.} = 16\ \text{MHz}.$$

A ce stade, cependant, on peut se demander si un filtre 2 de pré-filtrage, tel qu'un filtre SAW peut être réalisé en assurant la même performance à une fréquence intermédiaire FI plus faible.

Le procédé de sous-échantillonnage d'un signal à fréquence intermédiaire FI vidéo, selon l'invention, avec une fréquence d'échantillonnage d'environ 27 MHz, inférieure à celle généralement préconisée, permet de réaliser une conversion multi-standard A/D économique avec le circuit FI. Bien que le circuit échantillonneur-bloqueur qui précède le convertisseur A/D ait à satisfaire des exigences relativement fortes, cette solution reste avantageuse d'un point de vue économique.

## Revendications

1. Procédé de numérisation de signaux vidéo de fréquence intermédiaire, **caractérisé en ce qu'**il comporte les étapes suivantes :

   - une étape de pré-filtrage d'un signal (Sn) dont le canal ($B_{CH}$) est filtré des autres canaux adjacents,
   - une étape d'échantillonnage-blocage du signal (Sn) par un circuit d'échantillonnage-blocage (10), celui-ci ayant une largeur de bande utile jusqu'à au moins la fréquence intermédiaire maximale ($f_{FImax}$), celle-ci correspondant à la fréquence maximale du canal ($B_{CH}$), et

la fréquence d'échantillonnage ($f_s$) du circuit d'échantillonnage-blocage (10) étant comprise entre une fréquence d'échantillonnage minimale égale aux deux tiers de la fréquence intermédiaire maximale ($f_{FImax}$) et une fréquence d'échantillonnage maximale égale à la différence entre cette fréquence intermédiaire maximale et la largeur de bande du canal sélectionné ($B_{CH}$).

**2.** Procédé selon la revendication 1, **caractérisé en ce que** la fréquence d'échantillonnage minimale est réduite de la moitié de la largeur de bande du canal ($B_{CH}$).

**3.** Procédé selon l'une des revendications 1 à 2, **caractérisé en ce que**, dans le cas où la bande latérale résiduelle se trouve au delà d'une fréquence porteuse vidéo dans le sens des fréquences positives, le pré-filtrage est un filtrage de Nyquist et la fréquence intermédiaire maximale est égale à la fréquence de la porteuse vidéo.

**4.** Dispositif pour la numérisation de signaux vidéo de fréquence intermédiaire, **caractérisé en ce qu'**il comprend :

un circuit de pré-filtrage (2) pour recevoir un signal (Sn) de fréquence intermédiaire (FI) dont le canal (BCH) est filtré des autres canaux adjacents,
un circuit d'échantillonnage-blocage (10) pour échantillonner lesdits signaux filtrés, celui-ci ayant une largeur de bande utile jusqu'à au moins la fréquence intermédiaire maximale ($f_{FImax}$), celle-ci correspondant à la fréquence maximale du canal ($B_{CH}$),
la fréquence d'échantillonnage ($f_s$) de l'échantillionneur-bloqueur (10) étant comprise entre une fréquence d'échantillonnage minimale égale aux deux tiers de la fréquence intermédiaire maximale ($f_{FImax}$) et une fréquence d'échantillonnage maximale égale à la différence entre cette fréquence intermédiaire maximale et la largeur de bande du canal sélectionné ($B_{CH}$).

**5.** Dispositif selon la revendication 4, **caractérisé en ce que** la fréquence d'échantillonnage minimale est réduite de la moitié de la largeur de bande du canal ($B_{CH}$).

**Patentansprüche**

**1.** Verfahren zur Digitalisierung von Zwischenfrequenz-Videosignalen, **gekennzeichnet durch** folgende Schritte:

- ein Schritt zur Vorfilterung eines Signals (Sn), dessen Kanal ($B_{CH}$) aus anderen Nachbarkanälen gefiltert ist,
- ein Schritt zur Abtastung und Haltung des Signals (Sn) **durch** eine Abtast-Halte-Schaltung (10) mit einer Nutzbandbreite bis zu wenigstens der maximalen Zwischenfrequenz ($f_{ZFmax}$), die der Maximalfrequenz des Kanals ($B_{CH}$) entspricht, und
- wobei die Abtastfrequenz ($f_s$) der Abtast-Halte-Schaltung (10) zwischen einer minimalen Abtastfrequenz gleich zwei Drittel der maximalen Zwischenfrequenz ($f_{ZFmax}$) und einer maximalen Abtastfrequenz gleich der Differenz zwischen dieser maximalen Zwischenfrequenz und der Bandbreite des gewählten Kanals ($B_{CH}$) liegt.

**2.** Verfahren nach Anspruch 1, **dadurch gekennzeichnet, daß** die minimale Abtastfrequenz um die Hälfte der Bandbreite des Kanals ($B_{CH}$) verringert wird.

**3.** Verfahren nach einem der Ansprüche 1 bis 2, **dadurch gekennzeichnet, daß** in dem Fall, wo das Restseitenband sich oberhalb einer Video-Trägerfrequenz in Richtung der positiven Frequenzen befindet, die Vorfilterung eine Nyquist-Filterung und die maximale Zwischenfrequenz gleich der Frequenz des Videoträgers ist.

**4.** Vorrichtung zur Digitalisierung von Zwischenfrequenz-Videosignalen, **gekennzeichnet durch**:

eine Schaltung (2) zur Vorfilterung zum Empfang eines Signals (Sn) mit der Zwischenfrequenz (ZF), dessen Kanal ($B_{CH}$) aus anderen Nachbarkanälen gefiltert ist,
eine Abtast-Halte-Schaltung (10) zum Abtasten der gefilterten Signale mit einer Nutzbandbreite bis zu wenigstens der maximalen Zwischenfrequenz ($f_{Fimax}$), die der Maximalfrequenz des Kanals ($B_{CH}$) entspricht, wobei die Abtastfrequenz ($f_s$) der Abtast-Halte-Einheit (10) zwischen einer minimalen Abtastfrequenz gleich zwei Drittel der maximalen Zwischenfrequenz ($f_{Fimax}$) und einer maximalen Abtastfrequenz liegt, die gleich der Differenz zwischen dieser maximalen Zwischenfrequenz und der Bandbreite des gewählten Kanals ($B_{CH}$) ist.

**5.** Vorrichtung nach Anspruch 4, **dadurch gekennzeichnet, daß** die minimale Abtastfrequenz um die Hälfte der Bandbreite des Kanals ($B_{CH}$) verringert ist.

**Claims**

**1.** Method of digitizing intermediate frequency video signals, **characterized in that** it comprises the following steps:

- a step of prefiltering a signal (Sn) whose channel ($B_{CH}$) is filtered from the other adjacent channels,
- a step of sampling-and-holding the signal (Sn) by a sample-and-hold circuit (10), the latter having a useful bandwidth up to at least the maximum intermediate frequency ($f_{IF\ max}$), the latter corresponding to the maximum frequency of the channel ($B_{CH}$), and

the sampling frequency ($f_s$) of the sample-and-hold circuit (10) lying between a minimum sampling frequency equal to two thirds the maximum intermediate frequency ($f_{IF\ max}$) and a maximum sampling frequency equal to the difference between this maximum intermediate frequency and the bandwidth of the selected channel ($B_{CH}$).

**2.** Method according to Claim 1, **characterized in that** the minimum sampling frequency is reduced by half the bandwidth of the channel ($B_{CH}$).

**3.** Method according to one of Claims 1 to 2, **characterized in that**, in the case where the residual sideband lies beyond a video carrier frequency in the direction of the positive frequencies, the prefiltering is a Nyquist filtering and the maximum intermediate frequency is equal to the frequency of the video carrier.

**4.** Device for digitizing intermediate frequency video signals, **characterized in that** it comprises:

a prefiltering circuit (2) for receiving an intermediate frequency (IF) signal (Sn) whose channel (BCH) is filtered from the other adjacent channels,
a sample-and-hold circuit (10) for sampling the said filtered signals, this circuit having a useful bandwidth up to at least the maximum intermediate frequency ($f_{IF\ max}$), the latter corresponding to the maximum frequency of the channel ($B_{CH}$),
the sampling frequency ($f_s$) of the sample-and-hold circuit (10) lying between a minimum sampling frequency equal to two thirds the maximum intermediate frequency ($f_{IF\ max}$) and a maximum sampling frequency equal to the difference between this maximum intermediate frequency and the bandwidth of the selected channel ($B_{CH}$).

**5.** Device according to Claim 4, **characterized in that** the minimum sampling frequency is reduced by half the bandwidth of the channel ($B_{CH}$).

FIG.1

FIG.2A

Sortie 1
Sn-1    Sn    Sn+1

FIG.2B

Filtre 2

FIG.2C

Signal FI
$B_{CH}$
5    4
$-f_{FImax.}$    $f_{pc}$    $f_{FImax.}$

FIG.5

Signal
pente de Nyquist
$f_{pc}$

FIG.3A

FIG.3B

FIG.3C

FIG.4A

FIG.4B

FIG.4C